# DEMANDE DE BREVET EUROPEEN

(11) **EP 3 287 668 A1**
(43) Date de publication de la demande: **28.02.2018**
(21) Numéro de dépôt: 17177025.8
(22) Date de dépôt: 21.06.2017
(51) Int. Cl.: F16H 59/00, F16H 59/02, F16H 59/04

(54) **DISPOSITIF DE COMMANDE COMPORTANT UN MOYEN D'AMORTISSEMENT D'UNE GÂCHETTE**

(30) Priorité: 21.07.2016 FR 1656933
(71) Demandeur: PSA Automobiles SA, 78300 Poissy (FR)
(72) Inventeur: ORHANT, Mathieu, 70400 Héricourt (FR); POIRRIER, Pascal, 70290 Champagney (FR)

(57) **Abrégé**

L'invention concerne un dispositif de commande comportant un levier de commande (2) et une gâchette (1) comportant une première et une deuxième partie de gâchette (11, 12) aptes à coulisser longitudinalement sur le levier et assemblées solidaires l'une à l'autre par des moyens de fixation (14, 16). Selon l'invention, le dispositif comporte également un moyen d'amortissement (4) de vibrations monté en contact intermédiaire entre la première et la deuxième partie de gâchette (11,12) et un moyen de serrage (3) de la première et de la deuxième partie de gâchette l'une avec l'autre apte à mettre en pression le moyen d'amortissement (4) sous l'action de serrage. L'invention s'applique par exemple aux dispositifs de commande de boites de vitesses pour un véhicule automobile.

## Description

Le domaine de l'invention concerne un dispositif de commande comportant une gâchette formée de deux parties de gâchette assemblées solidaires.

Il est courant qu'un dispositif de commande d'une boite de vitesses soit équipé d'une gâchette de verrouillage de la marche arrière. Dans certain de ces dispositifs de commande la gâchette de verrouillage est formée de deux parties de gâchette, ou plus, qu'il est nécessaire de maintenir en liaison pour former un même organe solidaire. Il est connu du document WO201601268A1 déposé par la demanderesse un dispositif de commande à levier de manoeuvre comportant une gâchette formée par trois parties solidaires. La liaison solidarisant les parties de gâchette entre elles est réalisée généralement par des moyens d'assemblage mécanique, par exemple de type clipsage par un ergot et une accroche de verrouillage. On a constaté qu'il existe dans ces assemblages mécaniques un jeu entre les parties de gâchette provoquant leur vibration du fait d'une remontée de bruit dans l'habitacle via le câble de commande de la marche arrière. Cette situation n'est pas satisfaisante en terme de qualité de produit perçue par le conducteur. Il existe donc un besoin de palier les problèmes précités.

Plus précisément, l'invention concerne un dispositif de commande comportant un levier de commande et une gâchette comportant une première et une deuxième partie de gâchette aptes à coulisser longitudinalement sur le levier et assemblées solidaires l'une à l'autre par des moyens de fixation. Selon l'invention, le dispositif comporte également un moyen d'amortissement de vibrations monté en contact intermédiaire entre la première et la deuxième partie de gâchette et un moyen de serrage de la première et de la deuxième partie de gâchette l'une avec l'autre apte à mettre en pression le moyen d'amortissement sous l'action de serrage.

Selon une variante, le moyen de serrage comporte une première demi-bague en butée contre un premier épaulement de la première partie de gâchette et une deuxième demi-bague en butée contre un deuxième épaulement de la deuxième partie de gâchette, les dites première et deuxième demi-bagues coopérant l'une avec l'autre en serrage.

Selon une variante, le premier épaulement comporte une couronne destinée à recevoir en butée une base de la deuxième partie de gâchette et le moyen d'amortissement est monté en contact intermédiaire entre la couronne et la base.

Selon une variante, la couronne de la première partie de gâchette est de la forme d'un anneau définissant le côté supérieur du premier épaulement et la base de la deuxième partie de gâchette est une bordure inférieure du deuxième épaulement.

Selon une variante, le moyen d'amortissement est fixé à la couronne.

Selon une variante, le moyen d'amortissement est une bague réalisée en matériau élastomère.

Selon une variante, le moyen d'amortissement est une bague ayant une section en forme de L.

Selon une variante, les moyens de fixation sont constitués d'au moins un ergot de la première partie de gâchette coopérant avec au moins une accroche de verrouillage de la deuxième partie de gâchette.

Il est également prévu selon l'invention un véhicule automobile comportant une boite de vitesses pilotée par un dispositif de commande conforme à l'un quelconque des modes de réalisation précédent.

L'invention prévoit également un procédé d'assemblage d'un dispositif de commande comportant un levier de commande et une gâchette comportant une première et une deuxième partie de gâchette. Le procédé comporte :
- une première étape de montage d'un moyen d'amortissement sur la première partie de gâchette,
- une deuxième étape d'assemblage des dites première et deuxième parties de gâchette sur le levier par des moyens de fixation, le moyen d'amortissement étant monté en contact intermédiaire entre les dites première et deuxième parties de gâchette,
- une troisième étape de serrage des dites première et deuxième parties de gâchette l'une avec l'autre par un moyen de serrage.

Grâce à l'invention, le serrage des parties de gâchette et le moyen d'amortissement monté entre les dites parties de gâchette réduisent le jeu existant et empêchent les remontées de bruit dans l'habitacle provenant de la transmission mécanique. En particulier, les vibrations remontant via la partie de gâchette fixée au câble de la marche arrière sont ainsi filtrées.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1 représente une vue en perspective d'un mode de réalisation d'un dispositif de commande selon l'invention ;
- la figure 2 représente une coupe partielle des parties de gâchette du dispositif de commande selon l'invention;
- les figures 3A, 3B, 3C représentent des étapes du procédé d'assemblage du dispositif de commande selon l'invention.

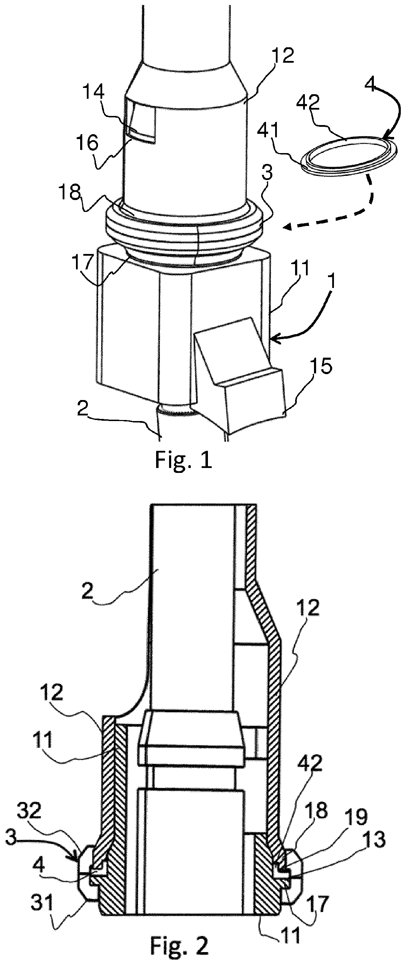

L'invention concerne un dispositif de commande comportant une gâchette formée de deux parties de gâchette ou plus. La gâchette est un organe d'actionnement manipulable par le conducteur pour piloter un autre dispositif externe, ou pour autoriser une commande spécifique du dispositif de commande. Dans le mode de réalisation présenté dans les figures 1, 2 et 3A, 3B et 3C, le dispositif de commande est un dispositif à levier de commande pour le pilotage d'une boite de vitesses d'un véhicule automobile. Dans ce mode de réalisation, la gâchette est une gâchette de verrouillage de la marche arrière commandant un câble d'actionnement d'un verrou de la marche arrière.

La figure 1 est une vue en perspective du dispositif de commande d'une boite de vitesses comportant un levier de commande 2 et une gâchette 1 comportant deux parties de gâchette 11, 12. Le Levier de commande 2 est positionné dans l'habitacle du véhicule automobile. La gâchette 1 est montée mobile en translation le long de l'axe du levier de commande 2 et est apte à coulisser longitudinalement sur le levier. Le levier de commande 2 est formé d'une tige mobile en pivotement à sa base permettant l'exécution des commandes de sélection et de passage des rapports de vitesses. La tige mobile est recouverte d'un surmoulage de revêtement fixe destiné à recevoir sur sa surface extérieure la gâchette 1 de verrouillage de la marche arrière. La gâchette 1 s'étend d'un pommeau chapeautant le levier de commande 2 jusqu'au moyen de fixation 15 d'un câble de commande du verrou de la marche arrière (le pommeau et le câble de commande ne sont pas représentés sur la figure 1). Le moyen de fixation 15 comporte une attache pour fixer une des deux extrémités du câble de commande du verrou de la marche arrière. Le moyen de fixation 15 est positionné sur la surface extérieure de la partie inférieure de la gâchette 1 pour fixer le câble de commande à l'extérieur du levier de commande 2.

Il est envisageable que, dans une variante du dispositif de commande, la fonction de verrouillage de la marche arrière puisse être réalisée à partir de la forme de la gâchette 1, celle-ci coopérant avec un mur de verrouillage d'accès à un couloir de sélection de la marche arrière positionné sur le bâti du dispositif de commande.

Plus précisément, la première partie de gâchette 11 est montée en position inférieure par rapport à la deuxième partie de gâchette 12 longitudinalement sur le levier de commande 2. Le levier de commande 2 s'étend verticalement dans l'habitacle. La deuxième partie de gâchette 12 est posée sur la première partie de gâchette 11 et des moyens de fixation 14, 16 permettent l'assemblage solidaire des deux parties. Les deux parties de gâchette ont un corps tubulaire dont les parois intérieures coopèrent avec la paroi extérieure du levier de commande pour permettre le coulissement longitudinalement au levier.

Dans ce mode de réalisation les moyens de fixation sont constitués de deux paires d'un ergot 14 et d'une accroche de verrouillage 16 coopérant ensemble pour opérer l'assemblage. L'ergot 14 présente une élasticité permettant son entrée dans l'accroche de verrouillage 16 lors de leur montage, ainsi que leur maintien en butée l'un contre l'autre une fois que les parties de gâchette sont assemblées. On notera que dans d'autres variantes du dispositif de commande il peut être prévu des réalisations distinctes des moyens de fixation sans sortir du cadre de l'invention.

Par ailleurs, le dispositif de commande comporte un moyen d'amortissement 4 monté en contact intermédiaire entre la première partie de gâchette 11 et la deuxième partie de gâchette 12 et un moyen de serrage 3 des dites parties de gâchette ensemble. Sur la figure 1, le moyen d'amortissement 4 est représenté séparément à l'extérieur du dispositif de commande. Le moyen d'amortissement 4 et le moyen de serrage 3 sont agencés pour rigidifier l'assemblage des parties de gâchette de manière à compresser le moyen d'amortissement 4 entre les parties de gâchette 11, 12 sous l'action du serrage. Le moyen de serrage 3 et le moyen d'amortissement 4 réduisent le jeu entre les parties de gâchette. Les propriétés amortissantes du moyen d'amortissement 4, du fait du matériau utilisé, réduisent les vibrations et filtrent les remontées de bruit provenant de la transmission mécanique du véhicule. Le moyen d'amortissement est réalisé par exemple dans un matériau élastomère de type caoutchouc.

Dans ce mode de réalisation, le moyen d'amortissement 4 est une bague, ayant de préférence une section en forme de L de sorte à présenter une surface d'appui 41 plane et annulaire en position supérieure pour recevoir la deuxième partie de gâchette 12. Sur le plan opposé de la bague, une surface d'appui plane inférieure et annulaire est en contact avec la première partie de gâchette 11. De plus, le moyen d'amortissement 4 comporte un anneau supérieur 42 de diamètre inférieur à la surface d'appui 41 faisant butée contre la paroi interne de la deuxième partie de gâchette 12 et la paroi externe de la première partie de gâchette 11. L'anneau supérieur 42 améliore l'amortissement entre les parties de gâchette.

Il est envisageable d'autres modes de réalisation du moyen d'amortissement 4. Par exemple dans une variante, le moyen d'amortissement 4 est de section circulaire et est monté dans une gorge annulaire de la première partie de gâchette 11. La gorge annulaire est destinée à recevoir une base de la deuxième partie de gâchette 12.

En figure 2, une coupe partielle réalisée sur l'axe du levier de commande du dispositif de commande est représentée, plus précisément seules les parties de gâchette 11, 12 sont représentées en coupe. Le moyen de serrage 3 est constitué d'une première demi-bague 31 en butée contre un premier épaulement 17 de la première partie de gâchette 11 et d'une deuxième demi-bague 32 en butée contre un deuxième épaulement 18 de la deuxième partie de gâchette 12, les dites demi-bagues coopérant l'une avec l'autre en serrage et recouvrant le premier et le deuxième épaulement 17, 18. Le premier et le deuxième épaulement présentent respectivement des première et deuxième butées en surface extérieure faisant face aux parois internes de la première et de la deuxième demi-bague 31, 32 respectivement. Les épaulements ont des profils en butée opposés l'un par rapport à l'autre symétriquement par rapport au plan de pose du moyen d'amortissement 4. Cet agencement permet le serrage des première et deuxième parties de gâchette. Dans ce mode de réalisation, le premier épaulement 17 est défini par une butée rectangulaire et le deuxième épaulement 18 par une butée conique. D'autres configurations des formes des butées sont envisageables sans sortir du cadre de l'invention. Par ailleurs, les deux demi-bagues 31, 32 coopèrent en vissage ou par un mécanisme de type quart de tour pour assurer le serrage des parties de gâchette 11, 12.

De plus, le premier épaulement 17 comporte une couronne 13 destinée à recevoir en butée une base 19 de la deuxième partie de gâchette 12 et le moyen d'amortissement 4 est monté en contact intermédiaire entre la couronne 13 et la base 19. La couronne présente une surface supérieure plane. Dans une variante, la couronne comporte une gorge pour recevoir la base 19. On notera que la couronne de la première partie de gâchette est de la forme d'un anneau définissant le côté supérieur du premier épaulement 17 et la base 19 de la deuxième partie de gâchette 12 est une bordure inférieure du deuxième épaulement 18. Ainsi, le moyen d'amortissement 4 est protégé à l'intérieur de l'espace formé par les deux demi-bagues 31, 32 des contaminations extérieures, telle que la poussière. De plus, la pression de serrage sur le moyen d'amortissement 4 est efficace du fait de sa prise entre les deux demi-bagues de serrage 31, 32.

On notera que le moyen d'amortissement 4 est fixé à la couronne 13, par exemple par collage ou par serrage et par un maintien en force sur la couronne. Le diamètre de la bague d'amortissement 4 peut être ajusté inférieurement au diamètre de la couronne 13 pour assurer son maintien.

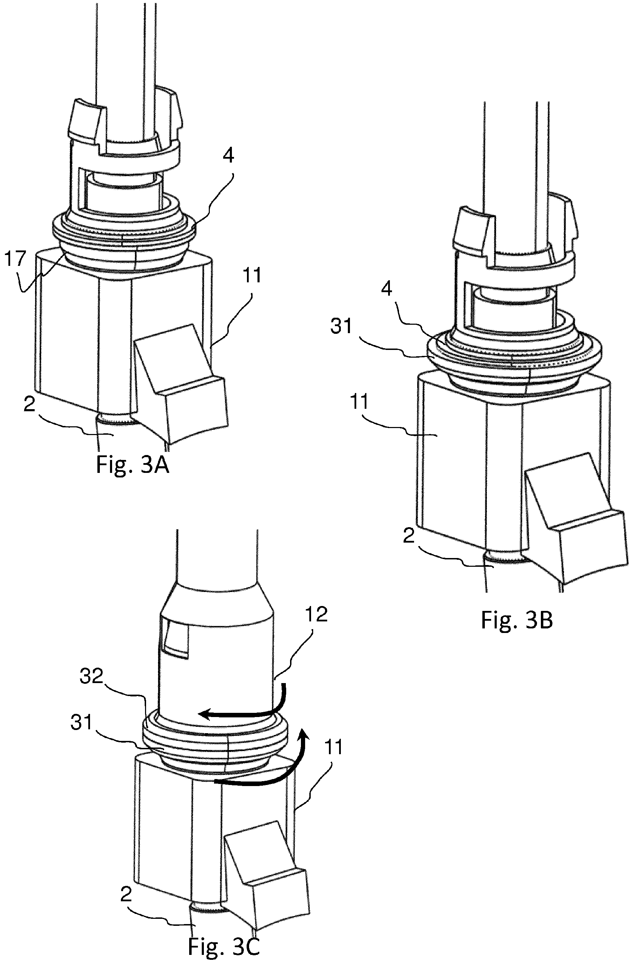

Les figures 3A, 3B, 3C représentent les étapes du procédé d'assemblage du dispositif de commande selon l'invention pour le mode de réalisation décrit en figure 1 et 2. Le procédé d'assemblage concerne les dispositifs de commande comportant un levier de commande et une gâchette d'actionnement comportant au moins une première et une deuxième partie de gâchette formant un organe solidaire.

En figure 3A, on représente une première étape de montage du moyen d'amortissement 4 sur la première partie de gâchette 11. Le moyen d'amortissement est collé, ou serré sur le côté supérieur de l'épaulement 17. En figure 3B, on représente la première partie de gâchette 11 qui est assemblée avec la première demi-bague 31 du moyen de serrage 3. A cette phase du procédé, la deuxième partie de gâchette 12 n'est pas montée sur le levier de commande 2. Le procédé comprend ensuite à une deuxième étape l'assemblage des dites première et deuxième parties de gâchette 11, 12 sur le levier 2 par les moyens de fixation 14, 16. Le moyen d'amortissement 4 est alors monté en contact intermédiaire entre les dites première et deuxième parties de gâchette. En figure 3C, on représente le dispositif de commande lors de l'exécution d'une troisième étape de serrage des dites première et deuxième parties de gâchette 11, 12 l'une avec l'autre par le moyen de serrage 3. Les deux demi-flèches représentent l'effort de vissage du serrage des deux demi-bagues 31, 32. Lors du serrage, le moyen d'amortissement 4 est mis en pression entre les parties de gâchette, assurant ainsi une réduction du jeu et un amortissement des vibrations.

La portée de l'invention n'est pas limitée par le mode de réalisation présenté dans les figures précédentes. Le dispositif de commande peut comporter deux parties de gâchette ou plus. On notera par ailleurs que la gâchette peut actionner un câble de commande, ou de par sa forme empêcher une commande du levier de commande tant qu'elle n'est pas actionnée par le conducteur. Le dispositif de commande s'applique à la commande d'une boite de vitesse ou tout autre dispositif sans sortir du cadre de l'invention.

## Revendications

1. Dispositif de commande comportant un levier de commande (2) et une gâchette (1) comportant une première et une deuxième partie de gâchette (11, 12) aptes à coulisser longitudinalement sur le levier et assemblées solidaires l'une à l'autre par des moyens de fixation (14, 16), **caractérisé en ce qu'**il comporte également un moyen d'amortissement (4) de vibrations monté en contact intermédiaire entre la première et la deuxième partie de gâchette (11,12) et un moyen de serrage (3) de la première et de la deuxième partie de gâchette l'une avec l'autre apte à mettre en pression le moyen d'amortissement (4) sous l'action de serrage.

2. Dispositif de commande selon la revendication 1, **caractérisé en ce que** le moyen de serrage (3) comporte une première demi-bague (31) en butée contre un premier épaulement (17) de la première partie de gâchette (11) et une deuxième demi-bague (32) en butée contre un deuxième épaulement (18) de la deuxième partie de gâchette (12), les dites première et deuxième demi-bagues coopérant l'une avec l'autre en serrage.

3. Dispositif de commande selon la revendication 2, **caractérisé en ce que** le premier épaulement (17) comporte une couronne (13) destinée à recevoir en butée une base (19) de la deuxième partie de gâchette (12) et le moyen d'amortissement (4) est monté en contact intermédiaire entre la couronne (13) et la base (19).

4. Dispositif de commande selon la revendication 3, **caractérisé en ce que** la couronne (13) de la première partie de gâchette (11) est de la forme d'un anneau définissant le côté supérieur du premier épaulement (17) et la base (19) de la deuxième partie de gâchette (12) est une bordure inférieure du deuxième épaulement (18).

5. Dispositif de commande selon la revendication 3 ou 4, **caractérisé en ce que** le moyen d'amortissement (4) est fixé à la couronne (13).

6. Dispositif de commande selon l'une quelconque des revendications 1 à 5, **caractérisé en ce que** le moyen d'amortissement (4) est une bague réalisée en matériau élastomère.

7. Dispositif de commande selon l'une quelconque des revendications 1 à 6, **caractérisé en ce que** le moyen d'amortissement (4) est une bague ayant une section en forme de L.

8. Dispositif de commande selon l'une quelconque des revendications 1 à 7, **caractérisé en ce que** les moyens de fixation sont constitués d'au moins un ergot (14) de la première partie de gâchette (11) coopérant avec au moins une accroche de verrouillage (16) de la deuxième partie de gâchette (12).

9. Véhicule automobile comportant une boite de vitesses pilotée par un dispositif de commande conforme à l'une quelconque des revendications 1 à 8.

10. Procédé d'assemblage d'un dispositif de commande comportant un levier de commande (2) et une gâchette comportant une première et une deuxième partie de gâchette (11, 12), **caractérisé en ce qu'**il comporte :
- une première étape de montage d'un moyen d'amortissement (4) sur la première partie de gâchette (11),
- une deuxième étape d'assemblage des dites première et deuxième parties de gâchette (11, 12) sur le levier (2) par des moyens de fixation (14, 16), le moyen d'amortissement (4) étant monté en contact intermédiaire entre les dites première et deuxième parties de gâchette,
- une troisième étape de serrage des dites première et deuxième parties de gâchette (11, 12) l'une avec l'autre par un moyen de serrage (3).
